# EUROPÄISCHE PATENTSCHRIFT

(11) **EP 2 721 258 B1**
(45) Veröffentlichungstag und Bekanntmachung des Hinweises auf die Patenterteilung: **24.06.2015**
(21) Anmeldenummer: 12742844.9
(22) Anmeldetag: 23.07.2012
(51) Int. Cl.: F01D 3/04, F01D 25/16, F16C 32/06

(54) **VERFAHREN ZUM BETRIEB EINER ROTATIONSMASCHINE**
METHOD FOR OPERATING A ROTATION MACHINE
PROCÉDÉ DESTINÉ AU FONCTIONNEMENT D'UNE MACHINE ROTATIVE

(30) Priorität: 21.07.2011 EP 11174791
(43) Veröffentlichungstag der Anmeldung: 23.04.2014
(73) Patentinhaber: Siemens Aktiengesellschaft, 80333 München (DE)
(72) Erfinder: JANSSEN, Stefan, 45147 Essen (DE); KURSCH, Michael, 45479 Mülheim an der Ruhr (DE)
(86) Internationale Anmeldenummer: PCT/EP2012/064411
(87) Internationale Veröffentlichungsnummer: WO 2013/011150

(56) Entgegenhaltungen:
- EP-A1- 1 479 875
- WO-A1-02/04827
- WO-A1-91/02174
- WO-A1-2009/083789
- FR-A1- 2 251 744
- US-A- 5 795 073

## Beschreibung

Die Erfindung betrifft ein Verfahren zum Betrieb einer Rotationsmaschine gemäß dem Oberbegriff des Anspruchs 1.

Eine gattungsgemäße Rotationsmaschine ist beispielsweise in der WO 00/28190 A1 beschrieben. Gemäß dieser Veröffentlichung ist die Rotationsmaschine eine Gasturbine axialer Bauart, mit den üblicherweise vorhandenen Komponenten Verdichter, Brennkammer, Turbine sowie einem gemeinschaftlichen Rotor für Verdichter und Turbine. Die bekannte Gasturbine umfasst ein verdichterseitiges Axiallager mit einer Hauptspur und einer Nebenspur zur axialen Positionierung des Gasturbinenrotors. Hauptspur und Nebenspur können dabei an einer Seitenfläche eines jeweiligen Wellenbunds unter Ausbildung eines hydrodynamischen Gleitfilms aus Hydrauliköl anliegen. Welche der beiden Spuren die axiale Lage des Rotors vorgibt, ist dabei betriebsabhängig. Eine dafür geeignete hydraulische Steuerung ist aus der EP 1 479 875 A1 bekannt. Dabei kann mit Hilfe eines 4/2-Wegeventils entweder die Hauptspur oder die Nebenspur druckbeaufschlagt werden, je nachdem, ob der Rotor axial verschoben werden soll oder nicht.

Dazu alternative Axiallager gehen aus WO 91/02174 A1 und aus der US 5,795,073 hervor.

Im bestimmungsgemäßen Betrieb der Gasturbine liegt die Seitenfläche des ersten Wellenbunds an der Hauptspur des Axiallagers an, da die im Turbinenbereich auf den Rotor axial einwirkenden Strömungskräfte des Heißgases größer sind als die Strömungskräfte im Verdichter und somit diesen stetig vom Verdichter in Richtung Turbineneinheit schieben. Die Nebenspur ist anstelle der Hauptspur dann im Kraftfluss des Axiallagers, wenn der Rotor der Gasturbine vom Stillstand auf Nenndrehzahl beschleunigt wird. Während dieses Hochfahrens tritt eine auf den Gasturbinenrotor axial wirkende resultierende Schubkraft auf, die entgegengesetzt zur Betriebs-Schubkraft gerichtet ist, nämlich von der Turbineneinheit in Richtung Verdichter. Etwas vor Erreichen der Nenndrehzahl ändert sich die aktuelle Schubrichtung schlagartig, so dass dann die Axialpositionierung des Rotors von der Nebenspur auf die Hauptspur wechselt.

Das vorbekannte Axiallager ist zudem mit axial verschieblichen Lagerelementen ausgestattet, um den Rotor während des stationären Betriebs der Gasturbine entgegen der Strömungsrichtung des Heißgases zu verschieben und damit Radialspalte in der Turbine zwischen Laufschaufelspitzen und einer diesen gegenüberliegenden Gehäusewand zu minimieren.

Es hat sich gezeigt, dass Betriebszustände beim Betrieb der Gasturbine auftreten können, die zu Axialschwingungen des Rotors führen. Diese Axialschwingungen können schlechtestenfalls zur Schädigung des Axiallagers oder von im Kraftfluss befindlichen Bauteilen führen, sofern die Amplituden der Axialschwingungen eine kritische Größe überschreiten. Die Axialschwingungen werden zumeist durch einen innerhalb der Brennkammer ablaufenden instabilen Verbrennungsprozess hervorgerufen. Die Ursachen der Instabilität sind häufig vielfältig und nicht kausal vorhersagbar.

Aufgabe der Erfindung ist daher die Bereitstellung eines Verfahrens zum Betrieb einer Rotationsmaschine, bei welchem die Axialschwingungen des Rotors gedämpft oder gar vermieden werden.

Die auf das Verfahren gerichtete Aufgabe wird mit einem solchen gemäß den Merkmalen des Anspruchs 1 gelöst. Vorteilhafte Ausgestaltungen und weitere Merkmale der Erfindung sind in den Unteransprüchen angegeben.

Beim erfindungsgemäßen Verfahren zum Betrieb einer Rotationsmaschine mit einem in einem Lager gelagerten Rotor, welcher Rotor zu einem Betriebszeitpunkt einer hauptsächlich in nur einer Axialrichtung - d.h. Hauptschubrichtung - wirkenden Schubkraft ausgesetzt ist und welche Schubkraft von einem ersten Spurlager des Lagers über Gleitmittel aufgenommen und abgeleitet wird, wobei das Lager ein zweites Spurlager aufweist, wird während dem Auftreten der Schubkraft zumindest zeitweise gleichzeitig das zweite Spurlager so angesteuert, dass es über den Rotor eine in Hauptschubrichtung wirkende Kraft auf das erste Spurlager erzeugt.

Die Erfinder haben erkannt, dass mit Hilfe der jeweils unbelasteten Spur - also dem zweiten Spurlager - die Möglichkeit besteht, beim Auftreten von Axialschwingungen auch das zweite Spurlager in Eingriff mit dem Rotor zu bringen und dadurch eine Dämpfung der Axialschwingungen über die Reduktion des Axialspiels an der belasteten - also dem ersten Spurlager - zu erreichen. Insofern wird der Rotor der Rotationsmaschine trotz Vorhandensein einer zum Zeitpunkt in nur einer Axialrichtung wirkenden Schubkraft zusätzlich mit einer weiteren, in der gleichen Richtung wirkenden Kraft beaufschlagt, um die Neigung des Rotors zum Schwingen zu verringern. Obwohl dadurch das erste Spurlager mit einer höheren Kraft beaufschlagt wird als durch die Schubkraft erzeugt, wird es üblicherweise dadurch nicht überlastet. Mit dem Verfahren kann sichergestellt werden, dass zwar nicht die Ursache der Axialschwingungen des Rotors, jedoch deren Eigenschaften signifikant verändert werden: die Amplitude der Axialschwingungen wird begrenzt. Dies vermeidet zuverlässig Schädigungen des Lagers oder von im Kraftfluss befindlichen Bauteilen.

Vorzugsweise ist das Lager und somit die beiden Spurlager jeweils als hydrodynamisches Gleitlager ausgestaltet, bei dem die kraftschlüssige Kopplung von Spurlager und Rotor durch das Einspeisen eines Hydrauliköls in den zwischen Spurlager und Rotor vorhandenen Axialspalt erreicht wird.

Besonders bevorzugt wird das Verfahren während eines instationären Betriebszustands und/oder während eines Teillastbetriebs einer als Turbomaschine ausgestalteten Rotationsmaschine durchgeführt. Insbesondere bei stationären Gasturbinen, bei denen üblicherweise eine in Axialrichtung wirkende Schubkraft auf den Rotor auftritt, können bei instationären Betriebszuständen, wie z.B. dem Anfahren der Gasturbine aus dem Stillstand bis auf Nenndrehzahl, Axialschwingungen auftreten. Auch bei niedriger Teillast können derartige Schwingungszustände auftreten. Insofern ist es von Vorteil, wenn lediglich während dieser Betriebszustände auch das zweite Spurlager kraftschlüssig mit dem Rotor verbunden ist. Üblicherweise ist im Volllastbetrieb das zweite Spurlager nicht kraftschlüssig an den Rotor gekoppelt, sondern lediglich nur das erste Spurlager, da in diesem Betriebszustand Axialschwingungen in der Regel nicht auftreten. Das spart die zur Versorgung des zweiten Spurlagers mit Hydraulikmittel benötigte Energie.

Weiter bevorzugt werden die Axialschwingungen des Rotors von einem Messaufnehmer erfasst und mit einem Grenzwert verglichen. Vorzugszweise wird erst bei Grenzwertüberschreitungen die vorgeschlagene Dämpfung des Rotors aktiviert, indem gleichzeitig das zweite Spurlager so angesteuert, dass es über den Rotor eine in Hauptschubrichtung wirkende Kraft auf das erste Spurlager erzeugt.

Selbstverständlich ist das Verfahren auch durchführbar vor, während und/oder nach einer Axialverschiebung des Rotors.

Die Erfindung wird nachfolgend anhand eines hydraulischen Axiallagers beschrieben. Selbstverständlich ist es auch möglich, die beiden Spuren des Axiallager durch zwei entgegengesetzt wirkende magnetische Axiallager zu ersetzen, die entsprechend der Erfindung gleichzeitig entgegengesetzte Schubkräfte auf den zu lagernden Rotor beim Auftreten von Axialschwingungen erzeugen können.

Weitere Vorteile und Merkmale der Erfindung ergeben sich aus einem Ausführungsbeispiel, welches in den angehangenen Figuren näher beschrieben ist. Es zeigen:
- FIG 1: eine stationäre Gasturbine in einem Längsteilquerschnitt,
- FIG 2: einen Längsschnitt durch ein Lager einer Rotationsmaschine mit einem ersten und einem zweiten Spurlager,
- FIG 3: das Hydrauliksystem zur Betätigung des hydraulischen Axiallagers nach FIG 2 und
- FIG 4: einen elektrischen Schaltplan zu Ansteuerung des Hydrauliksystems nach FIG 3.

In allen Figuren sind identische Merkmale mit den gleichen Bezugszeichen versehen.

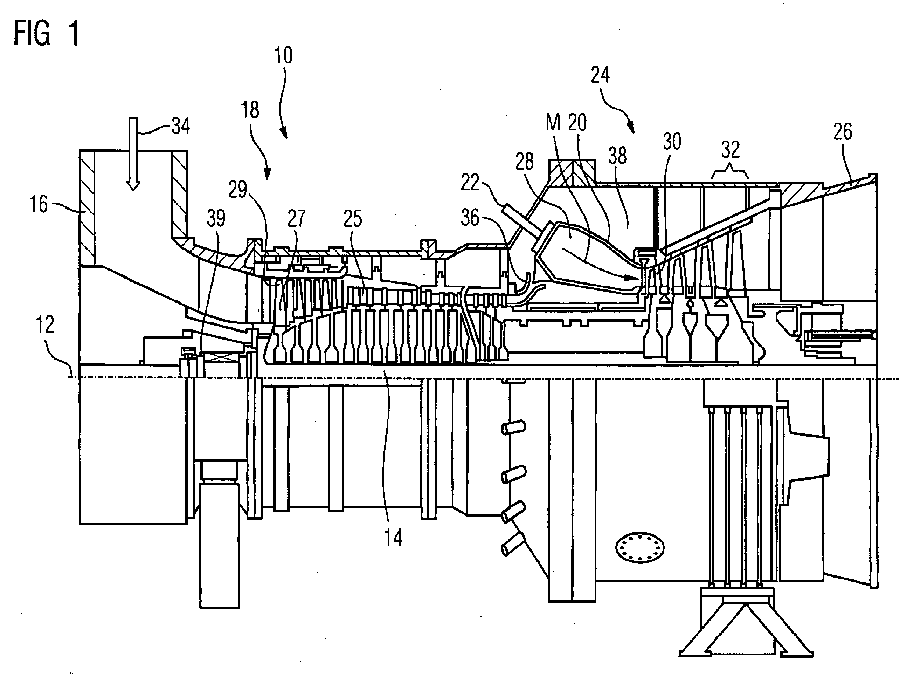

Figur 1 zeigt eine stationäre Gasturbine 10 in einem Längsteilschnitt. Die Gasturbine 10 weist im Innern einen um eine Rotationsachse 12 drehgelagerten Rotor 14 auf, der auch als Turbinenläufer bezeichnet wird. Entlang des Rotors 14 folgen aufeinander ein Ansauggehäuse 16, ein Verdichter 18, eine torusartige Ringbrennkammer 20 mit mehreren rotationssymmetrisch zueinander angeordneten Brennern 22, eine Turbineneinheit 24 und ein Abgasgehäuse 26.

Der Verdichter 18 umfasst einen ringförmig ausgebildeten Verdichterkanal 25 mit darin kaskadisch aufeinanderfolgenden Verdichterstufen aus Laufschaufel- und Leitschaufelkränzen. Die am Rotor 14 angeordneten Laufschaufeln 27 liegen mit ihren frei endenden Schaufelblattspitzen 29 einer äußeren Kanalwand des Verdichterkanals 25 gegenüber. Der Verdichterkanal 25 mündet über einen Verdichterausgangsdiffusor 36 in einem Plenum 38. Darin ist die Ringbrennkammer 20 mit ihrem Verbrennungsraum 28 vorgesehen, der mit einem ringförmigen Heißgaskanal 30 der Turbineneinheit 24 kommuniziert. In der Turbineneinheit 24 sind vier hintereinander geschaltete Turbinenstufen 32 angeordnet. Am Rotor 14 ist ein Generator oder eine Arbeitsmaschine (jeweils nicht dargestellt) angekoppelt.

Im Betrieb der Gasturbine 10 saugt der Verdichter 18 durch das Ansauggehäuse 16 als zu verdichtendes Medium Umgebungsluft 34 an und verdichtet diese. Die verdichtete Luft wird durch den Verdichterausgangsdiffusor 36 in das Plenum 38 geführt, von wo aus es in die Brenner 22 einströmt. Über die Brenner 22 gelangt auch Brennstoff in den Verbrennungsraum 28. Dort wird der Brennstoff unter Zugabe der verdichteten Luft zu einem Heißgas M verbrannt. Das Heißgas M strömt anschließend in den Heißgaskanal 30, wo es sich arbeitsleistend an den Turbinenschaufeln der Turbineneinheit 24 entspannt. Die währenddessen freigesetzte Energie wird vom Rotor 14 aufgenommen und einerseits zum Antrieb des Verdichters 18 und andererseits zum Antrieb einer Arbeitsmaschine oder elektrischen Generators genutzt.

Ein verdichterseitiges Lager 39 zur Lagerung des Rotors 14 ist in Figur 1 lediglich schematisch dargestellt.

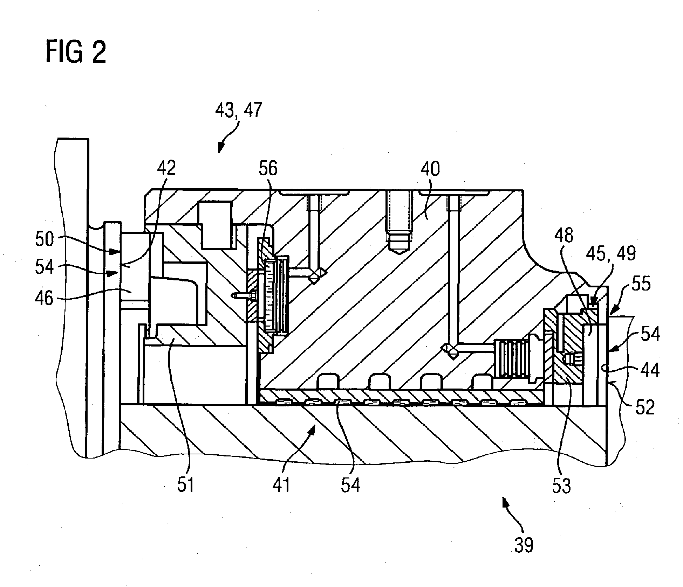

In FIG 2 ist das Lager 39 in einem Längsschnitt im Detail dargestellt. Das Lager 39 umfasst einen zentralen Lagerkörper 40, in dem zwei Axiallager 47, 49 und ein Radiallager 41 vorgesehen sind. Die Axiallager 47, 49 sind dabei als Hauptspurlager und als Nebenspurlager ausgebildet. Die beiden Axiallager 47, 49 werden nachfolgend kurz als Hauptspur 47 bzw. Nebenspur 49 oder gemeinsam als Spuren 47, 49 bezeichnet. Alle Lager 41, 47, 49 sind als hydrodynamische Gleitlager ausgebildet.

Die Hauptspur 47 umfasst einen Elementträger 51 und mehrere darin sitzende, über den Umfang verteilte Lagerelemente 46, welche jeweils eine Lagerfläche 50 besitzen. Die Lagerflächen 50 der Lagerelemente 46 sind der seitlichen Rotorfläche 42 unmittelbar benachbart. Ebenso umfasst die Nebenspur 49 einen Elementträger 53 mit mehreren, über den Umfang verteilten Lagerelementen 48, die jeweils eine der seitlichen Rotorfläche 44 gegenüberliegende Lagerfläche 52 besitzen. Die Lagerelemente 46, 48 können dabei durch auf die Elementträger 51, 53 einwirkendes Hydraulikmittel an die Rotorflächen 42, 44 zur Axiallagerung des Rotors 14 angepresst werden.

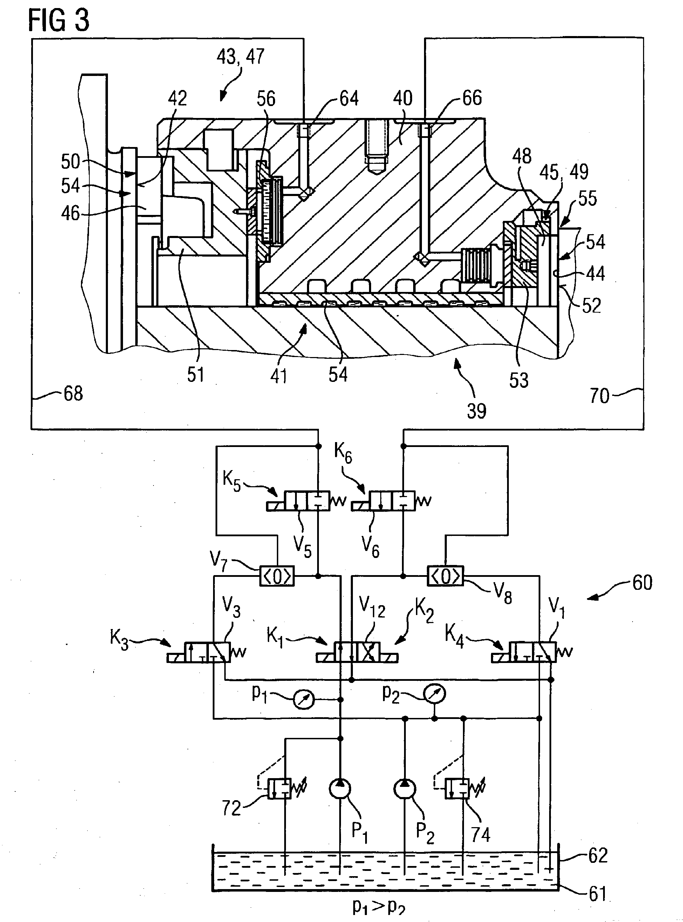

Zur Betätigung der beiden Spurlager 43, 45 ist ein Hydrauliksystem 60 (FIG 3) vorgesehen, mittels welchem sowohl bei verschobenem als auch bei nicht verschobenem Rotor 14 eine erfindungsgemäße Dämpfung von Axialschwingungen aktivierbar ist. Dieses Hydrauliksystem 60 umfasst neben einem Tank 62 für das Hydraulikmittel 61 ein Leitungssystem zum Verbinden des Tanks 62 mit einem Versorgungsanschluss 64 der Hauptspur 47 und einem Versorgungsanschluss 64 der Nebenspur 49. Für jede Spur 47, 49 ist eine Versorgungsleitung 68, 70 mit einer Vielzahl an Ventilen zur Steuerung vorgesehen. Eine erste Pumpe P₁ kann das Hydraulikmittel 61 mit einem höheren Druck p1 bereitstellen als eine zweite Pumpe P₂. Letztere stellt Hydraulikmittel 61 mit einem geringeren Druck p₂ bereit. Die Einstellung der Drücke p₁, p₂ erfolgt mit Hilfe von Druckbegrenzungsventilen 72, 74, deren eingangsseitigen Anschlüsse mit den ausgangsseitigen Anschlüssen der Pumpen P₁, P₂ verbunden sind. Die Druckbegrenzungsventile 72, 74 führen das überschüssige Hydraulikmittel 61 zurück in den Tank 62.

Ein 4/2-Wegeventil V₁₂, welches mit den Ausgang der Pumpe P₁ eingangsseitig verbunden ist, kann Hydraulikmittel 61 mit höherem Druck p₁ bei aktiviertem elektrischem Antrieb K₁ über ein Wechselventil V₇ der Hauptspur 47 oder bei aktiviertem elektrischem Antrieb K₂ über ein Wechselventil V₈ der Nebenspur 49 zuführen. Mit Hilfe von zwei 3/2-Wegeventilen V₃, V₄ kann mit dem Auftreten oder nach dem Auftreten von unzulässig großen Axialschwingungsamplituden des Rotors 14 die nicht mit einem hohen Druck p₁ versorgte Spur 47, 49 über das entsprechende Wechselventil V₇, V₈ Hydraulikmittel 61 mit niedrigerem Druck p₂ zugeführt werden. Zur Aktivierung der 3/2-Wegeventile V3, V4 ist der jeweils zugehörige elektrische Antrieb K₃ bzw. K₄ zu betätigen.

Aus den Spuren 47, 49 zurückfließendes Hydraulikmittel, was bei der Deaktivierung der Axialverschiebung des Rotors 14 oder bei der Deaktivierung der Dämpfung auftritt, wird über die zu den Wechselventilen V₇ und V₈ jeweils parallelgeschalteten 2/2-Wegenventile V₅, V₆ und anschließend über das 4/2-Wegeventil V₁₂ in den Tank 62 zurückgeführt.

Die Ventile V₃, V₄, V₅, V₆ werden über Federkraft zurückgestellt bei deaktivierten, elektrischen Antrieben Kₓ. Üblicherweise sind die elektrischen Antriebe als elektromagnetische Spulen ausgebildet.

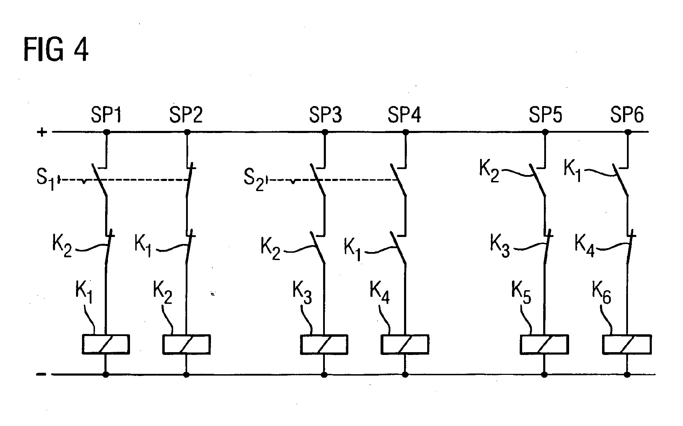

FIG 4 zeigt zudem das elektrische Schaltbild zur Ansteuerung der elektrischen Antriebe K₁ bis K₆ des Hydrauliksystems 60. Das Schaltbild umfasst sechs Strompfade SP1 bis SP6. Durch Betätigen eines Schalters S1 wird von einem Betrieb mit nicht verschobenem Rotor 14 zu einem Betrieb mit verschobenem Rotor 14 umgeschaltet. Durch die Betätigung eines Schalters S2 kann die Dämpfung des Rotors 14 aktiviert werden, was nachfolgend noch näher erläutert wird.

Beim Hochfahren der Gasturbine 10 wird der Gasturbinenrotor 14 von 0 min⁻¹ bis auf Nenndrehzahl beschleunigt. Währenddessen und auch im Betrieb der Gasturbine 10 treten sowohl im Verdichter 18 als auch in der Turbineneinheit 24 Strömungskräfte auf, die auf den Rotor 14 einwirken. Deren axialen Komponenten sind einander gegengerichtet und kompensieren sich teilweise. Beim Hochfahren schiebt die resultierende axiale Strömungskraft den Rotor 14 anfänglich in Richtung des Ansauggehäuses 16. Erst mit dem Erreichen einer UmschlagDrehzahl, die etwas unterhalb der Nenndrehzahl liegt, dreht sich die resultierende axiale Schubkraft schlagartig um, so dass der Rotor 14 dann in Richtung Abgasgehäuse 26 schiebt. Auch im bestimmungsgemäßen Betrieb der Gasturbine wird der Rotor 14 von den Strömungskräften des Heißgases M in diese Richtung geschoben. Diese Richtung wird als Hauptschubrichtung bezeichnet.

Während des Hochfahrens und auch im Betrieb der Gasturbine 10 liegt ein Film aus Hydraulikmittel 54 zwischen dem Rotor 14 und dem Radiallager 41 an.
Solange der Rotor 14 entgegen der Hauptschubrichtung schiebt, sind zu dessen Axiallagerung die beiden Flächen 44, 52 lediglich durch einen dünnen Film aus einem Hydraulikmittel, beispielsweise Hydrauliköl oder Turbinenöl, getrennt. Der Rotor 14 und die Nebenspur 49 sind dann kraftschlüssig verbunden, wohingegen zwischen der Lagerfläche 50 und der Rotorfläche 42 ein Luftspalt (nicht in FIG 2 dargestellt) vorhanden ist. Dies bedeutet, dass eine kraftschlüssige Kopplung der Hauptspur 47 mit dem Rotor 14 dann nicht gegeben ist.

Nach dem Erreichen der Umschlag-Drehzahl wechselt die Axiallagerung von der Nebenspur 49 auf die Hauptspur 47. Dazu bildet sich zwischen Lagerfläche 50 und Rotorfläche 42 ein hydrodynamisch wirkender Film aus dem Hydraulikmittel aus. Gleichzeitig wird die Nebenspur 49 unbelastet, indem ein Luftspalt 55 zwischen Lagerfläche 52 und Rotorfläche 44 auftritt (dargestellt in FIG 2).

Zu diesem Zeitpunkt ist weder Schalter S1 noch Schalter S2 betätigt, so über den Stromkreis SP2 allein Antrieb K₂ aktiviert ist.

Das Lagerelement 46 ist zur Einstellung von Radialspalten axial verschieblich, wobei zur Axialverschiebung in dem Lager 39 ein Ölraum 56 angeordnet ist, dem durch Betätigen des Schalters S1 Hydrauliköl mit einem höheren Druck p₁ einspeisbar ist, so dass eine synchrone axiale Verschiebung von Elementträger 51 und Lagerelementen 46 erreicht wird. Der höhere Druck p₁ wird dadurch erreicht, dass das Druckbegrenzungsventil 72 entsprechend eingestellt ist. Der Elementträger 51 weist zum Ölraum 56 hin an einem Innendurchmesser und einem Außendurchmesser jeweils einen Dichtring auf. Auch das Lagerelement 48 und der mit ihm zusammenwirkende Elementträger 53 sind ebenso axialverschieblich ausgebildet.

Für den Fall, dass der Rotor 14 aufgrund von Verbrennungsinstabilitäten im Teillastbetrieb der Gasturbine 10 zu Axialschwingungen neigt, kann zusätzlich zu der im Kraftfluss befindlichen (belasteten) Hauptspur 47 als erstes Spurlager 43 die Nebenspur 49 als zweites Spurlager 45 durch gleichzeitiges Zuführen des Hydraulikmittels auch in den Spalt zwischen Lagerfläche 52 und Rotorfläche 44 kraftschlüssig gekoppelt werden mit dem Ziel, das Axialspiel des Rotors 14 zu verringern. Dazu ist ein derartig großer Druck im Hydraulikmittel des zweiten Spurlagers 45 erforderlich, dass eine zusätzlich in Hauptschubrichtung des Rotors 14 wirkende Kraft vom zweiten Spurlager 45 über den Rotor 14 auf das erste Spurlager 43 erzeugt wird. Diese Kraft dämpft und begrenzt beim Auftreten von Axialschwingungen das Zurückpendeln des Rotors 14 entgegen der Strömungsrichtung des Heißgases M. Dadurch können Schädigungen sowohl am Rotor 14 als auch an den im Kraftschluss befindlichen Lagerbauteilen der Gasturbine 10 sicher vermieden werden. Um dies zu erreichen, wird S2 manuell oder selbsttätig bei Überschreiten einer unzulässig großen Axialschwingung betätigt, wodurch der Antrieb K₄ dann das Ventil V₄ betätigt. Nach der Beendigung des Axialschwingungsdämpfungsschrittes wird S2 deaktiviert, wodurch der Antrieb K₆ das Ventil V6 betätigt. Dadurch kann das Hydraulikmittel der Nebenspur 49 über die Leitung 70, die Ventil V₆ und V₁₂ in den Tank 62 abfließen.
Sofern während des Hochfahrens Axialschwingungen auftreten, können diese gedämpft werden, indem zu der bereits belasteten Nebenspur 49 die Hauptspur 47 zugeschaltet wird. In diesem Fall ist der Schalter S1 unbetätigt und der Schalter S2 betätigt. Die Hauptspur 47 erzeugt dann eine zusätzliche Kraft, welche über den Rotor 14 die Nebenspur 49 weiter belastet.

Selbstverständlich ist das Verfahren nicht nur bei Gasturbinen anwendbar, sondern auch bei anderen Rotationsmaschinen. Insgesamt betrifft die Erfindung somit ein Verfahren zum Betrieb einer Rotationsmaschine mit einem in einem Lager 39 gelagerten Rotor 14, welcher Rotor 14 zu einem Betriebszeitpunkt einer hauptsächlich in nur einer Axialrichtung wirkenden Schubkraft ausgesetzt ist und welche Schubkraft von einem ersten Spurlager 43 des Lagers 39 über Gleitmittel aufgenommen und abgeleitet wird, wobei das Lager 39 ein zweites Spurlager 45 aufweist. Um Verfahren anzugeben, bei welchem die Axialschwingungen des Rotors 14 gedämpft oder gar vermieden werden, wird vorgeschlagen, dass während dem Auftreten der Schubkraft zumindest zeitweise gleichzeitig das zweite Spurlager 45 eine in Schubrichtung wirkende Kraft auf das erste Spurlager 43 erzeugt wird. Hierdurch wird der Rotor 14 - in Axialrichtung gesehen -verspannt, wobei er währenddessen selbstverständlich weiterhin drehbar gelagert ist.

## Patentansprüche

1. Verfahren zum Betrieb einer Rotationsmaschine mit einem in einem Lager (39) gelagerten Rotor (14),
welcher Rotor (14) zu einem Betriebszeitpunkt einer hauptsächlich in nur einer Axialrichtung wirkenden Schubkraft ausgesetzt ist und welche Schubkraft von einem ersten Spurlager (43) des Lagers (39) über Gleitmittel aufgenommen und abgeleitet wird,
wobei das Lager (39) ein zweites Spurlager (45) aufweist, **gekennzeichnet durch** den Schritt,
dass während dem Auftreten der Schubkraft
zumindest zeitweise gleichzeitig das zweite Spurlager (45) eine in Schubrichtung wirkende Kraft auf das erste Spurlager (43) erzeugt.

2. Verfahren nach Anspruch 1,
bei dem erst nach bzw. mit dem Auftreten von Axialschwingungen des Rotors (14) die in Hauptschubrichtung wirkende Kraft aktiviert wird.

3. Verfahren nach Anspruch 1 oder 2,
welches während instationären Betriebszuständen und/oder während eines Teillastbetriebs einer als Turbomaschine ausgestalteten Rotationsmaschine durchgeführt wird.

4. Verfahren nach Anspruch 4,
welches bei einer als stationäre Gasturbine (10) ausgestalteten Turbomaschine durchgeführt wird.

5. Verfahren nach einem der vorangehenden Ansprüche,
welches vor und/oder während einer Axialverschiebung des Rotors (14) durchgeführt wird.

6. Verfahren, bei dem das Lager als hydraulisches Axiallager ausgestaltet ist.

## Claims

1. Method for operating a rotary machine having a rotor (14) which is mounted in a bearing (39),
which rotor (14) is, at a time during operation, subjected to a thrust force which acts substantially only in an axial direction, said thrust force being absorbed and dissipated by a first step bearing (43) of the bearing (39) via sliding means,
wherein the bearing (39) has a second step bearing (45),
**characterized by** the step
that, as the thrust force acts, the second step bearing (45) at least temporarily simultaneously generates a force that acts on the first step bearing (43) in the thrust direction.

2. Method according to Claim 1,
in which the force acting in the main thrust direction is activated only after or upon the occurrence of axial vibrations of the rotor (14).

3. Method according to Claim 1 or 2,
the method being implemented during transient operating states and/or during part-load operation of a rotary machine in the form of a turbomachine.

4. Method according to Claim 3,
the method being implemented in a turbomachine in the form of a static gas turbine (10).

5. Method according to one of the preceding claims,
the method being implemented before and/or during an axial displacement of the rotor (14).

6. Method in which the bearing is in the form of a hydraulic axial bearing.

## Revendications

1. Procédé pour faire fonctionner une machine tournante ayant un rotor (14) supporté dans un palier (39),
lequel rotor (14) est soumis à un instant de fonctionnement à une force de poussée agissant principalement seulement dans une direction axiale et laquelle force de poussée est absorbée et évacuée par une première crapaudine (43) du palier (39) par l'intermédiaire d'agent lubrifiant,
le palier (39) ayant une deuxième crapaudine (45),
**caractérisé par** le stade suivant lequel pendant l'apparition de la force de poussée
au moins de temps en temps la deuxième crapaudine (45) produit en même temps une force agissant dans la direction de poussée sur la première crapaudine (43).

2. Procédé suivant la revendication 1,
dans lequel on active la force agissant dans la direction de poussée principale seulement après ou avec l'apparition de vibrations axiales du rotor (14).

3. Procédé suivant la revendication 1 ou 2,
qu'on l'effectue pendant des états de fonctionnement non stationnaires et/ou pendant un fonctionnement en charge partielle d'une machine tournante constituée sous la forme d'une turbomachine.

4. Procédé suivant la revendication 3,
qu'on l'effectue pour une turbomachine conformée en turbine (10) à gaz fixe.

5. Procédé suivant l'une des revendications précédentes,
qu'on l'effectue avant et/ou pendant un déplacement axial du rotor (14).

6. Procédé, dans lequel le palier est conformé en palier axial hydraulique.
